Europäisches Patentamt

European Patent Office

Office européen des brevets

(11) Publication number: **0 095 337**
**B1**

# EUROPEAN PATENT SPECIFICATION

(45) Date of publication of patent specification: **24.08.88**

(51) Int. Cl.⁴: **G 08 B 25/00, H 04 B 3/54**

(21) Application number: **83302886.3**

(22) Date of filing: **19.05.83**

(54) Emergency access method in centralized monitoring system.

(30) Priority: **20.05.82 JP 86139/82**

(43) Date of publication of application:
**30.11.83 Bulletin 83/48**

(45) Publication of the grant of the patent:
**24.08.88 Bulletin 88/34**

(84) Designated Contracting States:
**DE FR GB IT**

(56) References cited:
**DE-A-2 844 453**
**US-A-4 163 218**

(73) Proprietor: **SHARP KABUSHIKI KAISHA**
**22-22 Nagaike-cho Abeno-ku**
**Osaka 545 (JP)**

(72) Inventor: **Tanaka, Hidehiko**
**2613-1 Ichinomoto-cho**
**Tenri-shi Nara-ken (JP)**
Inventor: **Ise, Masahiro**
**2187-A18-203 Mise-cho**
**Kashihara-shi Nara-ken (JP)**
Inventor: **Machino, Katsuyuki**
**31-101 Higashikidera-cho 1-chome**
**Nara-shi Nara-ken (JP)**
Inventor: **Matsubara, Toshiyuki**
**2613-1 Ichinomoto-cho**
**Tenri-shi Nara-ken (JP)**
Inventor: **Terasaka, Teiji**
**2613-1 Ichinomoto-cho**
**Tenri-shi Nara-ken (JP)**
Inventor: **Okamoto, Takaaki**
**1028-16 Fujiwara-cho**
**Nara-shi Nara-ken (JP)**

(74) Representative: **Wright, Peter David John et al**
**R.G.C. Jenkins & Co. 26 Caxton Street**
**London SW1H 0RJ (GB)**

Courier Press, Leamington Spa, England.

# Description

This invention relates to a centralized monitoring system utilizing power supply wiring in which a central station monitors the status of a plurality of terminals.

As is well known in the art, data transmission over power supply wiring is usually carried out in sychronism with the utility power frequency since there are various kinds of noise travelling over the power supply wiring and in synchronism with the utility power frequency. Only very slow transmission is allowed in which each data bit is assigned to a respective power supply frequency cycle and ocaxial cable or wireless transmission involving a rather complex procedure to achieve improvement in reliability has not been available up to date.

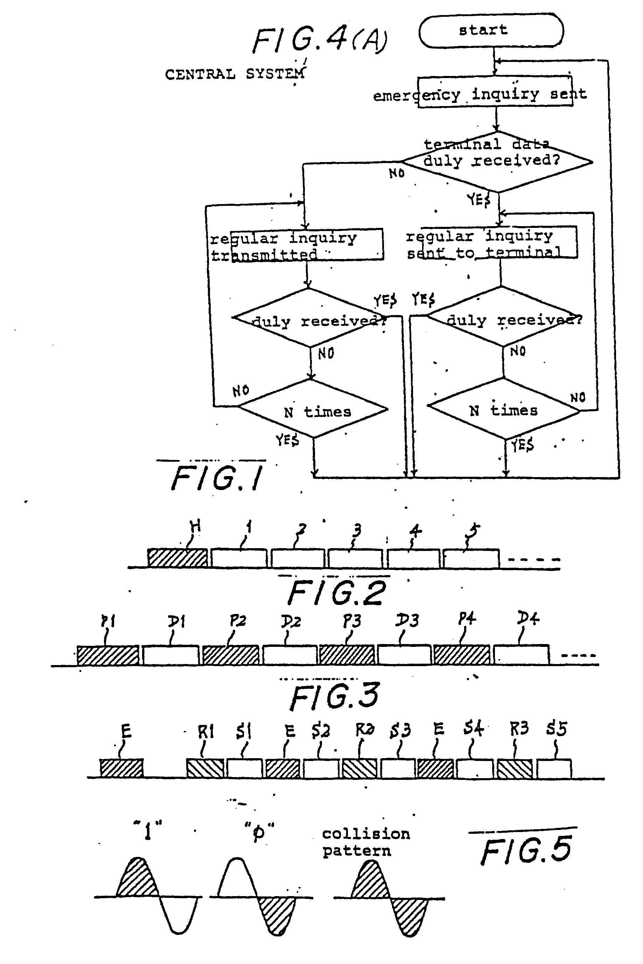

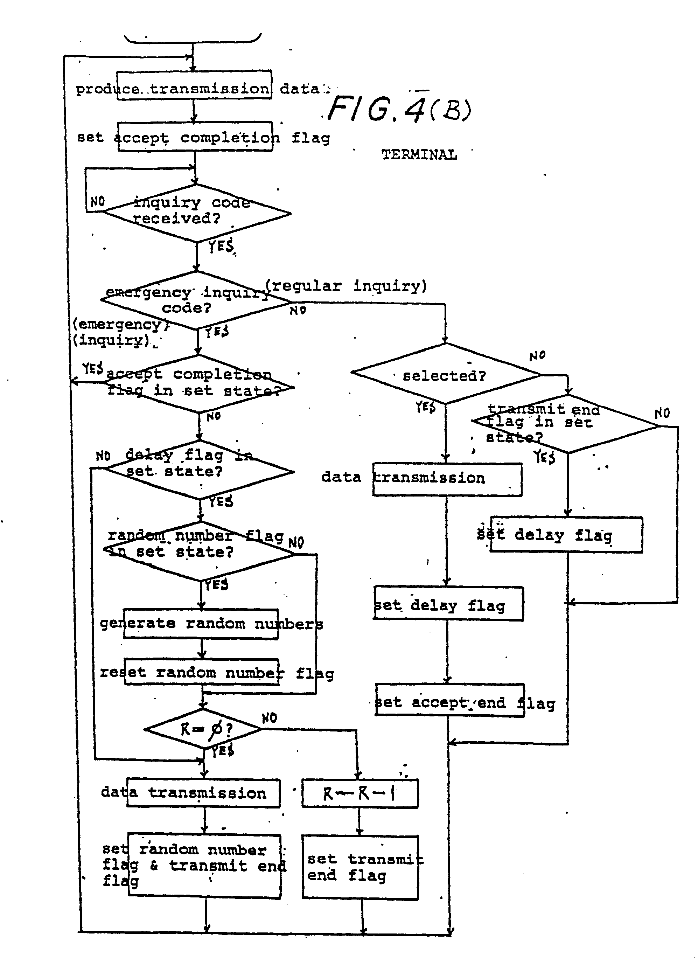

The simplest methods for terminal monitoring are the time-sharing fixed assignment method and the polling method as shown in Figs. 1 and 2 respectively. In the time-sharing fixed assignment method, as shown in Fig. 1, each terminal is permitted to transmit data 1—5 in its own time slot after the recognition of a specific code H (referred to as "header") from a central system. In the polling method, as shown in Fig. 2, only a terminal selected by address signals (polling signals) $P_1$, $P_2$, $P_3$ and so forth is permitted to transmit data $D_1$, $D_2$, $D_3$ and so forth. Both of these conventional methods, however, have the problem that it takes a substantial amount of time for the central system to collect all of the data if more than several tens of terminals are installed. The most serious problem is that the system is unable to respond quickly to any emergency request included in the data being transmitted from the terminals in case of fire, leakage of gas, burglary or the like.

US—A—4163218 discloses an electronic control system in which switching control signals for a number of electrical devices are transmitted from a central control unit to the devices over power lines from which all of the devices are energized. The control signals, each including an address portion identifying a particular device, are time-division multiplexed, and status response signals are returned from the devices to the central control unit. There is no provision, however, for the transmission of emergency status data from the devices to the central control unit.

DE—A—2844453 does disclose the facility for the transmission of spontaneous data to a central station from a number of substations in a monitoring system, this system does not use power supply wiring for the data transmission. Between successive interrogations of different substations a call is sent out to all substations for spontaneous data, and if two or more substations need to transmit spontaneous data in response to the same call, a random generator is used to establish a sequence for the transmission of the different items of spontaneous data in further interrogation cycles. However, this document does not fully explain when or how the allotting of the data to the further cylces takes place.

According to the present invention, there is provided a centralized monitoring system comprising a central station and a plurality of terminals, and means defining a data transmission path between said central station and said terminals, said system including means for repeatedly performing a monitoring operation in which the terminals are polled in succession by regular polling signals which are transmitted from the central station over said transmission path, and which include terminal address data, said monitoring operation further including the transmission from the said central station to said terminals of an emergency enquiry code in response to which the terminals may immediately transmit status data relating to a terminal emergency condition, the sensing of collision of a said emergency status data transmitted from one terminal in response to a given said emergency code with a said emergency status data from another terminal and the restoring of the system from the collision state by causing the collided emergency status data to be transmitted from said terminals with randomly determined delay times characterised in that said transmission path defining means comprises an indoor power supply wiring system, and in that said delay times are set at each said terminal requiring retransmission in response to the recept by those terminals of a said emergency code following said given emergency code.

The present invention will be better understood from the detailed description given hereinbelow and the accompanying drawings which are given by way of illustration only, and thus are not limitative of the present invention and wherein:

FIG. 1 is a timing chart showing the conventional time-sharing fixed assignment method;

FIG. 2 is a timing chart showing the conventional polling method;

FIG. 3 is a timing chart showing control operation according to an embodiment of the present invention;

FIG. 4A is a flow chart describing the control operation performed in the central station of a centralized monitoring system according to the present invention;

FIG. 4B is a flow chart describing the control operation performed in each terminal is said centralized monitoring system; and

FIG. 5 is a waveform chart showing carrier signals carrying data superimposed during each cycle of the utility power supply voltage.

FIG. 3 is a timing chart showing an emergency access method according to the present invention, FIG. 4(A) is a flow chart describing control procedures carried out by a central system, and FIG. 4(B) is a flow chart describing control procedures in terminals. The central system performing the control operation depicted in FIG. 3 transmits alternatively emergency inquiry codes E and regular inquiry codes $R_1$, $R_2$ and so forth. The regular inquiry codes $R_1$, $R_2$ and so forth are polling signals having address information for the respective terminals and normally incremented or decremented each time data $S_1$, $S_2$, $S_3$ and so forth from a respective one of the terminals is duly received. It may be desirable that the data be re-transmitted a predetermined number of times in the event of inadvertent failure to receive such data. Insofar as the method described so far relies upon nothing other than these inquiry codes, it faces the same problem as with the conventional method in that if the system includes an increased number of terminals it takes a long time to collect the data from all of the terminals largely because at any time during a monitoring cycle only the selected one of the terminals is allowed to transmit the data. However, an emergency code E is used to enable other terminals to transmit emergency data $S_2$, $S_4$ between the successive regular pollings.

Although this emergency code E is used to call all of the terminals, only the terminal or terminals whose data have not been accepted by the central system yet (that is, its acceptance completion flag has not been set yet) can transmit that emergency data to the central system immediately upon receipt of the emergency code. When the central system received the emergency data correctly, the central system on the one hand sends a polling signal to that terminal as the succeeding regular inquiry code $R_1$, $R_2$, $R_3$ and so forth and the terminal on the other hand re-transmits the same regular reply data to the central system. Once the emergency data $S_2$, $S_4$ has been accepted by the central system, the acceptance completion flag at the respective terminal is set not to respond to the succeeding emergency inquiry codes E as long as the emergency data $S_2$, $S_4$ remain unchanged in content.

When more than one terminal sends the emergency data $S_2$, $S_4$ concurrently in the above system the data $S_2$, $S_4$ come into collision with each other. To restore the system from such collision, the concept of random delay is adopted in the system according to the present invention. In other words, subsequent to its transmission of the emergency data $S_2$, $S_4$ a particular terminal which does not receive its own regular inquiry code $R_1$, $R_2$, $R_3$ and so forth (i.e. the emergency data from that terminal has not been received duly by the central system due to collision with emergency data from any other terminal or the like and thus other regular inquiry codes $R_1$, $R_2$, $R_3$ are transmitted for selection of other terminals) places its delay flag into a set state and generates random numbers upon receipt of the succeeding emergency code E. Transmission of the emergency data $S_2$, $S_4$ is carried out after being postponed by delay times determined by the resulting random numbers. Data collision among more than one terminal is eliminated through repetition of the above procesure.

Detection of data collision can be achieved readily by a coding method as fully disclosed in our European published Application No: EP—A—0106924, filed on October 26, 1982. As suggested in FIG. 5, data "1" is defined by the signal pattern where a carrier is present during the first half of the utility power supply frequency but not during the second half thereof and data "φ" is defined by the signal pattern where such a carrier is present during the sond half and not during the first. This implies that there is necessarily the difference of at least one bit among data from the individual terminals. In the event of a collision, there is developed the abnormal pattern where a carrier is present during both the first and second halves and it is therefore possible to detect collision upon the occurrence of such abnormal pattern.

## Claims

1. A centralized monitoring system comprising a central station and a plurality of terminals, and means defining a data transmission path between said central station and said terminals, said system including means for repeatedly performing a monitoring operation in which the terminals are polled in succession by regular polling signals ($R_1$, $R_2$ etc) which are transmitted from the central station over said transmission path, and which include terminal address data, said monitoring operation further including the transmission from said central station to said terminals of an emergency enquiry code (E) in response to which the terminals may immediately transmit status data ($S_2$, $S_4$) relating to a terminal emergency condition, the sensing of collision of a said emergency status data transmitted from one terminal in response to a given said emergency code with a said emergency status data from another terminal, and the restoring of the system from the collision state by causing the collided emergency status data to be retransmitted from said terminals with randomly determined delay times characterised in that said transmission path defining means comprises an indoor power supply wiring system, and in that said delay times are set at each said terminal requiring retransmission in response to the receipt by those terminals of a said emergency code (E) following said given emergency code.

2. A centralized monitoring system according to claim 1 characterized in that said central station is arranged to transmit said emergency code (E) regularly after each successive regular polling signal ($R_1$, $R_2$ etc).

3. A centralized monitoring system according to claim 1 or claim 2, characterized in that said terminals are operable so that during a performance of said monitoring operation, only those terminals which at the time of transmission of an emergency enquiry code have not yet been polled and have not registered acceptance by the central station of regular condition data transmitted to the central station in response to being polled, are capable of responding to that emergency code.

4. A centralized monitoring system according to any preceding claim characterized in that said central station is operable so that when it receives emergency status data which has not collided with other emergency status data, it polls the terminal from which the emergency status data is received with a said regular polling signal, and in that in response to being so polled that terminal restransmits the emergency status data to said central station.

5. A centralized monitoring system according to claim 4 characterized in that each said terminal is operable to determine that it needs to retransmit a said emergency status data and therefore set a said delay time if after having first transmitted that emergency status data it does not receive a said regular polling signal from the central station before receiving said following emergency code.

6. A centralized monitoring system according to any preceding claim characterized in that said terminals are operable so that once a terminal has registered acceptance by the central station of an emergency status data transmitted from that terminal in response to a said emergency code, it is incapable of responding to a subsequent emergency code so long as the emergency condition at that terminal remains unchanged.

7. A centralized monitoring system according to any preceding claim characterized in that each said terminal includes a random number generator which is operable in response to the receipt by that terminal of a said following emergency code, to generate a random number which determines said delay time for retransmission of said emergency status data.

8. A centralized monitoring system according to claim 7 characterized in that each said terminal is operable so that after a said random number has been generated at that terminal a corresponding number of subsequently received emergency codes are counted before the emergency status data is retransmitted from that terminal.

9. A centralized monitoring system according to any preceding claim characterized in that said central station is operable so that if it fails to receive a said regular or emergency status data from a terminal which it has just polled by means of a said regular polling signal, it repolls that terminal.

**Patentansprüche**

1. Zentralisiertes Überwachungssystem mit einer Zentralstation und einer Mehrzahl von Endgeräten, sowie Einrichtungen zur Bildung eines Datenübertragungsweges zwischen der Zentralstation und den Endgeräten, wobei das System Einrichtungen zur wiederholten Durchführung einer Überwachung aufweist, bei der die Endgeräte aufeinanderfolgend durch regelmäßige Adressdaten für die Endgeräte enthaltende Wählsignale ($R_2$, $R_2$ etc.) angewählt werden, die von der Zentralstation über den Übertragungsweg ausgesendet werden, wobei die Überwachungsoperation außerdem die Übertragung eines Notfall-Abfragecodes (E) von der Zentralstation zu den Endgeräten in Abhängigkeit davon, welches Endgerät sofort Statusdaten ($S_2$, $S_4$) in Bezug auf eine Notfallbedingung eines Endgerätes übertragen kann, umfaßt und weiterhin die Erfassung einer Kollision der von einem Endgerät in Abhängigkeit von einem gegebenen Notfallcode ausgesandten Notfall-Statusdaten mit den Notfall-Statusdaten eines anderen Endgerätes, und die Rücksetzung des Systems aus dem Kollisionsstatus durch Auslösen der Wierderaussendung der kollidierenden Notfall-Statusdaten zu den Endgeräten mit zufällig fetgelegten Verzögerungszeiten beinhaltet, dadurch gekennzeichnet, daß die Einrichtungen zur Bildung des Übertragungsweges ein internes Spannungsversorgungssystem aufweisen, und daß die Verzögerungszeiten an jedem, eine Wiederaussendung efordernden Endgerät in Abhängigkeit von dem Empfang eines Not-fallcodes (E), der dem, gegebenen Notfallcode folgt, durch diese Endgeräte eingestellt werden.

2. Einrichtung nach Anspruch 1, dadurch gekennzeichnet, daß die Zentralstation den Notfallcode (E) regelmaßig nach jedem forlaufenden regulären Wählsignal ($R_1$, $R_2$ etc.) überträgt.

3. Einrichtung nach Anspruch 1 oder 2, dadurch gekennzeichnet, daß die Endgeräte so betreibbar sind, daß während der Durchfürung eines Überwachungsvorganges nur diejenigen Endgeräte auf den Notfallcode antworten können, die zum Zeitpunkt der Aussendung des Notfall-Abfragecodes noch nicht angewählt worden sind und von der Zentralstation nicht bezüglich der Annahme von regulär zu der Zentralstation übertragenen Daten als Antwort auf einen Anruf registriert worden sind.

4. Einrichtung nach einem der vorhergehenden Ansprüche, dadurch gekennzeichnet, daß die Zentralstation so betreibbar ist, daß sie bei Empfang von Notfall-Statusdaten die nicht mit anderen Notfall-Statusdaten kollidieren, das Endgerät, von dem die Notfall-Statusdaten empfangen werden, mit einem regulären Rufsignal anwählt, und daß als Antwort auf einen derartigen Anruf dieses Endgerät die Notfall-Statusdaten erneut zu der Zentralstation sendet.

5. Einrichtung nach Anspruch 4, dadurch gekennzeichnet, daß jedes Engerät so betreibbar ist, daß es entscheidet, ob Notfall-Statusdaten erneut gesendet werden müssen und dazu eine Verzögerungszeit festlegt, wenn es nach erster Aussendung der Notfall-Statusdaten kein reguläres Anrufsignal von der Zentralstation empfängt, bevor der folgende Notfallcode empfangen wird.

6. Einrichtung nach einem der vorhergehenden Ansprüch, dadurch gekennzeichnet, daß die Endgeräte so betreibbar sind, daß ein Endgerät im Hinblick auf die Beantwortung eines nachfolgenden Notfallcodes so lang gesperrt ist, wie die Notfall-Bedingung an dem Endgerät unverändert bleibt, wenn dieses die Annahme der von ihm ausgesendeten Notfall-Statusdaten durch die Zentralstation als Antwort auf einen Notfallcode registriert hat.

7. Einrichtung nach einem der vorhergehenden

Anspruch, dadurch gekennzeichnet, daß jedes Endgerät einen Zufallsgenerator aufweist, der in Abhängigkeit von dem Empfang des folgenden Notfallcodes durch das Endgerät betreibar ist, um eine Zufallszahl zu erzeugen, die die Verzögerungszeit bis zur Wiederaussendung der Notfall-Statusdaten bestimmt.

8. Einrichtung nach Anspruch 7, dadurch gekennzeichnet, daß jedes Engerät so betreibbar is, daß nach Erzeugung der Zufallszahl an dem Endgerät eine entsprechende Anzahl aufeinanderfolgend empfangener Notfallcodes gezählt wird, bevor die Notfall-Statusdaten von diesem Endgerät eneut ausgesendet werden.

9. Einrichtung nach einem der vorhergehenden Ansprüche, dadurch gekennzeichnet, daß die Zentralstation so betreibbar ist, daß sie bei Ausbleiben der reulären oder Notfall-Statusdaten von einem Endgerät, das gerade mittels eines regulären Anrufsignales angerufen worden war, dieses Endgerät erneut anruft.

## Revendications

1. Système de surveillance centralisé comportant un poste central et une pluralité de terminaux, et des moyens définissant une voie de transmission de données entre ledit poste central et lesdits terminaux, ledit système comprenant des moyens pour exécuter d'une manière répétée une opération de surveillance, lors de laquelle les terminaux sont appelés successivement par des signaux réguliers d'appel ($R_1$, $R_2$, etc), qui sont transmis à partir du poste central par l'intermédiaire de ladite voie de transmission et incluent des données d'addresses des terminaux, ladite opération de surveillance incluant en outre la transmission, depuis ledit poste central jusqu'auxdits terminaux, d'un code d'interrogation d'urgence (E), en réponse auquel les terminaux peuvent transmettre immédiatement des données d'état ($S_2$, $S_4$) concernant l'état d'urgence d'un terminal, la détection d'une collision entre une donnée d'état d'urgence transmise depuis un terminal en réponse à un code donné d'urgence, et une donnée d'état d'urgence provenant d'un autre terminal, et la remise à l'état initial du système à partir de l'état de collision par déclenchement de la retransmission de la donnée d'état durgence entrée en collision, à partir desdits terminaux, avec des temps de retard déterminés de façon aléatoire, caractérisé en ce que lesdits moyens définissant la voie de transmission comprennent un systeme de câbles d'alimentation en énergie interne, et en ce que lesdits temps de retard sont fixés dans chacun desdits terminaux nécessitant une retransmission en réponse à la réception, par ces terminaux, dudit code, d'urgence (E) succédant audit code d'urgence donné.

2. Système de surveillance centralisé selon la revendication 1, caractérisé en ce que ledit poste central est agencé de mainière à émettre régulièrement ledit code d'urgence (E) après chaque signal régulier successif d'appel ($R_1$, $R_2$, etc).

3. Système de surveillance centralisé selon la revendication 1 ou 2, caractérisé en ce que lesdits terminaux peuvent agir de manière que, lors d'une exécution de ladite opération de surveillance, seuls les terminaux qui, à l'instant de la transmission d'un code d'interrogation d'urgence n'ont pas encore été appelés et n'ont pas enregistré l'acceptation, de la part du poste central, de la donnée d'état régulière transmise au poste central en réponse à leur appel par ce dernier, sont à même de répondre à ce code d'urgence.

4. Système de surveillance centralisé selon l'une quelconque des revendications précédentes, caractérisé en ce que ledit poste central peut agir de manière que, lorsqui'il reçoit une donnée d'etat d'urgence, qui n'est pas entrée en collision avec d'autres données d'état d'urgence, il appelle le terminal, depuis lequel la donnée d'état d'urgence a été reçue, avec un signal régulier d'appel, et en ce que en réponse à cet appel ainsi effectué, ce terminal retransmet la donnée d'état d'urgence audit poste central.

5. Système de surveillance centralisé selon la revendication 4, caractérisé en ce que chacun desdits terminaux peut agir de manière à déterminer qu'il a besoin de réémettre ladite donnée d'état d'urgence et par conséquent de fixer ledit temps de retard si, après avoir tout d'abord émis cette donnée d'état d'urgence, il ne reçoit pas un signal régulier d'appel de la part du poste central avant de recevoir ledit code d'urgence suivant.

6. Système de surveillance centralisé selon l'une quelconque des revendications précédentes, caractérisé en ce que lesdits terminaux peuvent agir de telle sorte que, lorsqu'un terminal a enregistré l'acceptation, faite, par le poste central, d'une donnée d'état d'urgence transmise à partir de ce terminal en réponse audit code d'urgence, il ne peut pas répondre à un code d'urgence ultérieur tant que la condition d'urgence dans ce terminal reste inchangée.

7. Système de surveillance centralisé selon l'une quelconque des revendications précédentes, caractérisé en ce que chacun desdits terminaux comporte un générateur de nombres aléatoires qui peut agir en réponse à la réception, par ce terminal, d'un code, d'urgence ultérieur, pour produire un nombre aléatoire qui détermine ledit temps de retard pout la retransmission de ladite donnée d'état d'urgence.

8. Système de surveillance centralisé selon la revendication 7, caractérisé en ce que chacun desdits terminaux peut agir de manière qu'une fois que ledit nombre aléatoire a été produit dans ce terminal, un nombre correspondant de codes d'urgence reçus ultérieurement sont comptés avant que la donnée d'état d'urgence soit retransmise à partir de ce terminal.

9. Système de surveillance centralisé selon l'une quelconque des revendications précédentes, caractérisé en ce que ledit poste central peut agir de manière que, s'il n'est pas à même de recevoir ladite donnée d'état régulier ou d'urgence à partir d'un terminal qui'il vient d'appeler au moyen d'un signal régulier d'appel, il réitère son appel à ce terminal.

FIG.4(A)

CENTRAL SYSTEM

start

emergency inquiry sent

terminal data duly received?

NO

YES

regular inquiry transmitted

regular inquiry sent to terminal

YES   YES

duly received?

duly received?

NO

NO

NO

N times

N times

NO

YES

YES

FIG.1

H   1   2   3   4   5   - - - -

FIG.2

P1   D1   P2   D2   P3   D3   P4   D4   - - - -

FIG.3

E   R1   S1   E   S2   R2   S3   E   S4   R3   S5

FIG.5

"1"   "0"   collision pattern

0 095 337

# FIG.4(B)

TERMINAL

produce transmission data

set accept completion flag

inquiry code received? — NO

YES

emergency inquiry code? — NO (regular inquiry)

(emergency) (inquiry)

YES — accept completion flag in set state? — YES

NO

delay flag in set state? — NO

YES

random number flag in set state? — NO

YES

generate random numbers

reset random number flag

R = ∅? — NO

YES

data transmission | R ← R − 1

set random number flag & transmit end flag | set transmit end flag

selected? — NO

YES

transmit end flag in set state? — NO

YES

data transmission

set delay flag

set delay flag

set accept end flag

2